# EUROPÄISCHE PATENTSCHRIFT

(11) **EP 0 399 224 B1**
(45) Veröffentlichungstag und Bekanntmachung des Hinweises auf die Patenterteilung: **05.01.1994**
(21) Anmeldenummer: 90107742.0
(22) Anmeldetag: 24.04.1990
(51) Int. Cl.: B60Q 1/56, B60Q 1/26

(54) **Fahrzeugleuchte, insbesondere zur Beleuchtung des hinteren Kennzeichenschildes**
Vehicle lights, particularly for illuminating the rear registration number plate
Feux de véhicules, en particulier pour l'éclairage de la plaque d'immatriculation

(30) Priorität: 11.05.1989 DE 8905867 U
(43) Veröffentlichungstag der Anmeldung: 28.11.1990
(73) Patentinhaber: Hella KG Hueck & Co., 59552 Lippstadt (DE)
(72) Erfinder: Hunold, Franz-Josef, D-4780 Lippstadt (DE); Kasparek, Paul, D-4780 Lippstadt (DE)

(56) Entgegenhaltungen:
- AU-A- 418 598
- DE-A- 2 522 629
- DE-C- 3 538 682
- FR-A- 2 201 429
- FR-A- 2 223 628
- US-A- 4 488 206

## Beschreibung

Die Erfindung betrifft eine Fahrzeugleuchte, insbesondere zur Beleuchtung des hinteren Kennzeichenschildes, mit einem mit der Karosserie verbundenen, teilweise lichtdurchlässigen Gehäuseoberteil und einem Gehäuseunterteil mit an einer Glühlampenfassung angeformten Flansch zur Auflage auf dem Rand der Karosserieöffnung und mit an dem Gehäuseunterteil die Karosserieöffnung hintergreifenden elastischen Armen.

Derartige Kennzeichenleuchten sind bereits bekannt und zumeist mit einem sehr tief in den Karosserieausschnitt reichenden unteren Gehäuseteil versehen, was einmal in der Gestaltung und Nutzung des Kofferraums hinderlich ist und zum anderen bei der Befestigung dieses Teils durch Schrauben von außen einen leichten Zugriff für Unbefugte in den Kofferraum ermöglicht, indem nach Ausbau der Kennzeichenleuchte das Kofferraumschloß geöffnet wird. In der Regel ist sowohl für die Montage als auch zur Demontage lediglich ein Schraubendreher nötig, um sich den Zugang zum Kofferraum des Fahrzeugs ohne Zerstörung zu verschaffen.

Außerdem ist aus der US-A-4 488 206 eine Fahrzeugleuchte bekannt, deren aus Gehäuseoberteil und Gehäuseunterteil zusammengesetztes Gehäuse kastenförmig ausgeführt ist. Das kastenförmige Gehäuse hintergreift mit federnden Armen den Rand einer das Gehäuse aufnehmenden Karosserieöffnung. Hierbei sind die federnden Arme des Gehäuses separate Teile und verlaufen parallel zur Einsteckrichtung des Gehäuseunterteils.

Aufgabe der Erfindung ist es deshalb, eine Kennzeichenleuchte derart auszubilden, daß die Einbautiefe in den Karosserieausschnitt sehr flach gehalten werden kann und gleichzeitig ein zerstörungsfreier Ausbau der Leuchten von Unbefugten erschwert ist.

Diese Aufgabe wird erfindungsgemäß dadurch gelöst, daß die die Karosserieöffnung hintergreifenden Arme längs der rechteckförmigen Grundfläche des Flansches und tangential zur zylindrischen Lampenfassung verlaufen, die elastischen Arme quer zur Einsteckrichtung verlaufen und an die Glühlampenfassung angebunden sind, wobei der lichte Abstand zwischen den elastischen Armen und der Flanschunterseite annähernd der Stärke des Karosserieblechs entspricht.

Eine weitere vorteilhafte Ausgestaltung der Erfindung hat zum Gegenstand, daß der Flansch mit seiner Längsachse senkrecht zur Mittelachse der Glühlampenfassung steht und mit seiner Querachse im spitzen Winkel zur Mittelachse der Glühlampenfassung und zu den Seitenwandungen der federnden Arme verläuft. Diese Lage ermöglicht eine optimale Position der Glühlampe hinsichtlich der zu beleuchtenden Fläche in Anpassung der Karosseriegegebenheit um den Karosserieausschnitt.

In einer weiteren vorteilhaften Ausgestaltung der Erfindung weist das Gehäuseunterteil vier elastische Arme auf, die durch ihre Anordnung in annähernd jede Ecke des rechteckförmigen Flansches eine ausreichende Verhakung des Gehäuseunterteils gewährleisten und somit eine relativ große Sicherheit für die Entfernung durch Unbefugte bietet.

Gemäß einer weiteren vorteilhaften Ausgestaltung weist der Flansch auf seiner Unterseite zwischen den freien Enden je zweier parallel verlaufender elastischer Arme Arretierstege auf. Diese bewirken eine Festlegung des Gehäuseunterteils längs des rechteckförmigen Flansches, so daß ein spielfreier Sitz erreicht wird.

Ebenfalls ist es vorteilhaft, daß die freien Enden der elastischen Arme gegenüber den Arretierstegen leicht zurückgesetzt angeordnet sind. Dies bewirkt, daß die elastischen Arme nach dem Eindrücken in den Karosserieausschnitt niemals in ihrer Beweglichkeit bzgl. der kurzen Seiten des Karosserieausschnitts eingeschränkt werden, da zu diesen Seiten ein genügender Spielraum verbleibt, der ein sicheres Hintergreifen des Karosserierandes ermöglicht.

In einer weiteren vorteilhaften Ausführung weisen die freien Enden der federnden Arme auf ihrer Außenseite eine Verdickung auf, welche den Rand der Karosserieöffnung hintergreifen und in Einsetzrichtung sich verjüngend eine Auflaufschräge bilden. Diese Anordnung wirkt im Prinzip wie ein Widerhaken; denn ist das Gehäuseteil einmal in die Karosserieöffnung eingeschoben, verhaken sich die Verdickungen hinter dem Rand und ein Lösen der Verdickungen wäre nur vom Inneren des Kofferraums unter Zurückdrücken vom Karosserierand möglich.

Weitere Einzelheiten der Erfindung ergeben sich aus der folgenden Beschreibung eines in der Zeichnung dargestellten Ausführungsbeispiels. Es zeigen
- Figur 1: eine Vorderansicht einer Kennzeichenleuchte,
- Figur 2: eine Vorderansicht eines Gehäuseunterteils,
- Figur 3: eine Seitenansicht des Gehäuseunterteils und
- Figur 4: eine Ansicht aus Richtung X auf das Gehäuseunterteil
In der Zeichnung ist eine hintere Kennzeichenleuchte eines Kraftfahrzeugs dargestellt, die sich aus einem teilweise transparenten Gehäuseoberteil (1) und einem Gehäuseunterteil (2) zusammensetzt. Am Gehäuseunterteil (2) ist eine Glühlampenfassung (3) zur Aufnahme einer Glühlampe (4) angeformt. Weiterhin ist am Gehäuseunterteil (2) ein rechteckförmiger Flansch (5) angeformt, auf dessen Unterseite elastische Arme (6) angeordnet sind, die einen Karosserierand (8) hintergreifen. Zwischen den elastischen Armen (6) befinden sich Arretierstege (7), die am Karosserierand (8) liegen. Zwei Schrauben (9) verbinden das Gehäuseoberteil (1) über eine Gummidichtung (10) mit dem Karosserierand (8).

Bei der Montage der Kennzeichenleuchte wird zunächst das Gehäuseteilunterteil (2) in die Karosserieöffnung gedrückt. Dabei gleiten die elastischen Arme (6) am Rand (8) der Karosserieöffnung entlag und hintergreifen diesen. Gleichzeitig verhindern die unterhalb des Flansches (5) zwischen den elastischen Armen (6), angebrachten Arretierstege (7) das Verrutschen des gesamten Gehäuseunterteils in Längsausdehnung der federnden Arme (6). Anschließend kann das Gehäuseoberteil (1), welches das Gehäuseunterteil (2) abdeckt, mit Hilfe der Schrauben (9) an der Karosserie befestigt werden. Für den Fall eines unbefugten Entfernens des Gehäuseoberteils, was lediglich mit einem Schraubendreher möglich ist, bleibt jedoch weitestgehend verhindert, daß auch zum Zwecke des Eindringens in den geschlossenen Kofferraum das Gehäuseunterteil entfernt werden kann.

Das Gehäuseunterteil (2) der Kennzeichenleuchte, das ähnlich einer selbsttätigen Verriegelung befestigt ist, läßt auch aufgrund des überlappenden Flansches (5) seine Entfernung von außen nur unter Zerstörung dieses Teils zu.

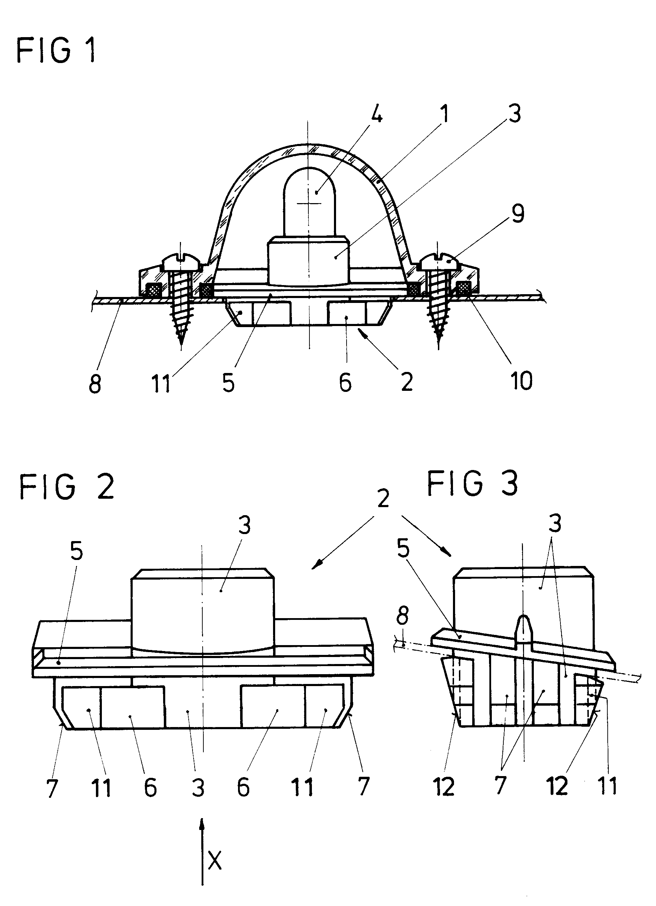

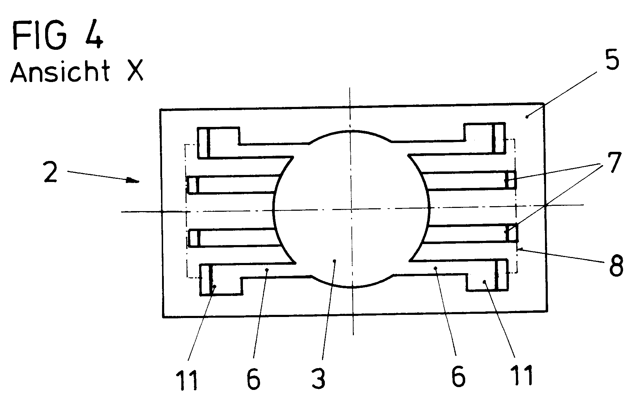

Aus den Figuren 2 bis 4 ist gut zu erkennen, daß die zylindrische Glühlampenfassung (3) in einem mittleren Abschnitt von dem Flansch (5) umgeben ist. Figur 4 zeigt die tangential an die zylindrische Glühlampenfassung (3) angeformten federnden Arme (6). Die Arme (6) hintergreifen mit den an ihren freien Enden angebrachten Verdickungen (11) selbstrastend den Rand (8) der gestrichelt dargestellten Karosserieöffnung. Die Verdickungen (11) sind Nasen, welche an den sich abgewandten Seiten der Arme (6) angeformt sind.

Figur 2 zeigt, daß die federnden Arme (6) unterhalb des Flansches (5) quer zur Einsteckrichtung des Gehäuseunterteils (2) verlaufen. Die Arretierungsstege (7) überragen die freien Enden der federnden Arme (6) und liegen an den kurzen Seiten des Randes (8) der rechteckförmigen Karosserieöffnung an. An den langen Seiten der rechteckförmigen Karosserieöffnung liegen die federnden Arme (6) bzw. die Glühlampenfassung (3) mit ihrer Mantelfläche an.

## Patentansprüche

1. Fahrzeugleuchte, insbesondere zur Beleuchtung des hinteren Kennzeichenschildes, mit einem mit der Karosserie verbundenen, zumindest teilweise lichtdurchlässigen Gehäuseoberteil (1) und einem Gehäuseunterteil (2), an dem eine Glühlampenfassung (3) an einem Flansch (5) zur Auflage auf den Rand (8) der Karosserieöffnung und elastische Arme (6) zum Hintergreifen des Randes (8) der Karosserieöffnung angeformt sind, gekennzeichnet durch folgende Merkmale:
a) die die Karosserieöffnung hintergreifenden elastischen Arme (6) verlaufen unterhalb und parallel zu der rechteckförmigen Grundfläche des Flansches (5) und tangential zur zylindrischen Glühlampenfassung (3),
b) die elastischen Arme (6) verlaufen quer zur Einsteckrichtung des Unterteils in die Karosserieöffnung und sind an der Glühlampenfassung (3) angebunden,
c) der lichte Abstand zwischen den elastischen Armen (6) und der Flanschunterseite entspricht der Stärke des Karosserieblechs (8).

2. Fahrzeugleuchte nach Anspruch 1, bei der die Mittelachse der Glühlampenfassung nicht rechtwinkelig zu der Karosseriewandung verläuft, dadurch gekennzeichnet, daß der Flansch (8) mit seiner Längsachse senkrecht zur Mittelachse der Glühlampenfassung (3) steht und mit seiner Querachse im spitzen Winkel zur Mittelachse der Glühlampenfassung (3) und zu den Seitenwandungen der federnden Arme verläuft.

3. Fahrzeugleuchte nach Anspruch 1, dadurch gekennzeichnet, daß das Gehäuseunterteil (2) vier elastische Arme (6) aufweist.

4. Fahrzeugleuchte nach Anspruch 1 bis 3, dadurch gekennzeichnet, daß zwischen den freien Enden je zweier parallel verlaufender elastischer Arme (6) der Flansch auf seiner Unterseite Arretierstege (7) aufweist.

5. Fahrzeugleuchte nach Anspruch 1, 3 oder 4, dadurch gekennzeichnet, daß die freien Enden der elastischen Arme (6) gegenüber den Arretierstegen (7) leicht zurückgesetzt angeordnet sind.

6. Fahrzeugleuchte nach Anspruch 1, 3 oder 5, dadurch gekennzeichnet, daß die freien Enden der federnden Arme auf ihrer Außenseite eine Verdickung (11) aufweisen, welche den Rand der Karosserieöffnung hintergreifen.

7. Fahrzeugleuchte nach Anspruch 6, dadurch gekennzeichnet, daß diese Verdickungen in Einsetzrichtung sich verjüngen und somit eine Auflaufschräge (12) bilden.

## Claims

1. A vehicle lamp, particularly for illuminating the rear number plate, with an upper housing part (1) which is attached to the bodywork and which is at least partially transparent, and a lower housing part (2) on which a bulb holder (3) is formed on a flange (5) for supporting on the edge (8) of the bodywork aperture and on which resilient arms (6) are formed for engaging behind the edge (8) of the bodywork aperture, characterised by the following features:
a) the resilient arms (6) which engage behind the bodywork aperture run underneath and parallel to the rectangular base of the flange (5) and tangentially to the cylindrical bulb holder (3),
b) the resilient arms (6) run transversely to the direction of insertion of the lower part into the bodywork aperture and are connected to the bulb holder (3),
c) the clearance between the resilient arms (6) and the underside of the flange corresponds to the thickness of the sheet metal (8) of the bodywork.

2. A vehicle lamp according to claim 1, wherein the centre line of the bulb holder does not extend at right angles to the bodywork wall, characterised in that the flange (5) is located with its longitudinal axis perpendicular to the centre line of the bulb holder (3), and with its transverse axis at an acute angle to the centre line of the bulb holder (3) and to the sidewalls of the resilient arms.

3. A vehicle lamp according to claim 1, characterised in that the lower housing part (2) has four resilient arms (6).

4. A vehicle lamp according to claims 1 to 3, characterised in that the flange has detent projections (7) on its underside between the free ends of each two parallel resilient arms (6).

5. A vehicle lamp according to claims 1, 3 or 4, characterised in that the free ends of the resilient arms (6) are disposed slightly set back in relation to the detent projections (7).

6. A vehicle lamp according to claims 1, 3 or 5, characterised in that the free ends of the resilient arms have thickened regions (11) on their outsides, which engage behind the edge of the bodywork aperture.

7. A vehicle lamp according to claim 6, characterised in that the said thickened regions taper in the direction of insertion and thus form a leading bevel (12).

## Revendications

1. Feu de véhicule, notamment pour l'éclairage de la plaque d'immatriculation arrière, comprenant une partie supérieure (1) de boîtier au moins partiellement transparente, solidaire de la carrosserie, et une partie inférieure (2) de boîtier, avec laquelle sont venues d'une seule pièce, une douille (3) de lampe à incandescence, une collerette (5) destinée à s'appliquer sur le bord (8) de l'ouverture de la carrosserie, et des bras élastiques (6) destinés à s'accrocher derrière le bord (8) de l'ouverture de la carrosserie, caractérisé par les particularités suivantes :
a) les bras élastiques (6) qui s'accrochent derrière l'ouverture de la carrosserie s'étendent au-dessous de la surface de base rectangulaire de la collerette (5), parallèlement à cette surface, et tangentiellement à la douille cylindrique (3) de la lampe à incandescence,
b) les bras élastiques (6) s'étendent transversalement à la direction d'insertion de la partie inférieure de la carrosserie et sont solidaires de la douille (3) de la lampe à incandescence,
c) la distance libre entre les bras élastiques (6) et la face inférieure de la collerette correspond à l'épaisseur de la tôle (8) de la carrosserie.

2. Feu de véhicule selon la revendication 1, dans lequel l'axe médian de la douille de la lampe à incandescence ne s'étend pas perpendiculairement à la paroi de la carrosserie, caractérisé en ce que la collerette (8) est perpendiculaire à l'axe médian de la douille (3) de la lampe à incandescence par son axe longitudinal, tandis que, par son axe transversal, elle forme un angle aigu avec l'axe médian de la douille (3) de la lampe à incandescence et avec les parois latérales des bras élastiques.

3. Feu de véhicule selon la revendication 1, caractérisé en ce que la partie inférieure (2) du boîtier présente quatre bras élastiques (6).

4. Feu de véhicule selon les revendications 1 à 3, caractérisé en ce que sur sa surface inférieure, la collerette présente des nervures d'arrêt (7) entre les extrémités libres de chaque paire de bras élastiques (6) s'étendant parallèlement.

5. Feu de véhicule selon la revendication 1, 3 ou 4, caractérisé en ce que les extrémités libres des bras élastiques (6) sont disposées légèrement en retrait par rapport aux nervures d'arrêt (7).

6. Feu de véhicule selon la revendication 1, 3 ou 5, caractérisé en ce que les extrémités libres des bras élastiques présentent, sur leur face extérieure, un renflement (11) qui s'accroche derrière le bord de l'ouverture de la carrosserie.

7. Feu de véhicule selon la revendication 6, caractérisé en ce que ces renflements s'amincissent dans le sens de l'insertion et forment ainsi une rampe d'entrée (12).
